# FASCICULE DE BREVET EUROPEEN

(11) **EP 0 699 141 B1**
(45) Date de publication et mention de la délivrance du brevet: **18.12.1996**
(21) Numéro de dépôt: 94915590.7
(22) Date de dépôt: 06.05.1994
(51) Int. Cl.: B60K 41/06, F16H 59/08

(54) **DISPOSITIF DE COMMANDE ET DE GESTION DE BOITE DE VITESSES AUTOMATIQUE**
BEDIEN- UND STEUEREINRICHTUNG EINES AUTOMATISCHEN GETRIEBES
MANAGEMENT AND CONTROL DEVICE FOR AN AUTOMATIC GEARBOX

(30) Priorité: 07.05.1993 FR 9305794
(43) Date de publication de la demande: 06.03.1996
(73) Titulaire: GUICHARD, Philippe Jean-Claude, F-26120 Chabeuil (FR); SCHLOTTERBECK, Jean-Pierre, F-26300 Rochefort-Samson (FR)
(72) Inventeur: GUICHARD, Philippe Jean-Claude, F-26120 Chabeuil (FR); SCHLOTTERBECK, Jean-Pierre, F-26300 Rochefort-Samson (FR)
(74) Mandataire: de Beaumont, Michel
(86) Numéro de dépôt international: FR9400526
(87) Numéro de publication internationale: WO9426550

(56) Documents cités:
- CH-A- 183 359
- DE-A- 2 043 191
- FR-A- 2 672 953
- US-A- 4 237 752

## Description

La présente invention concerne les véhicules automobiles; plus particulièrement cette invention concerne un dispositif de gestion et de contrôle de la boîte de vitesses.

Dans la production automobile actuelle, il existe principalement deux types de transmissions: les boîtes de vitesses à commande manuelle ou mécaniques à embrayage, et les boîtes de vitesses automatiques, le plus souvent à convertisseur de couple hydraulique ; il existe également des boîtes dites semi-automatiques.

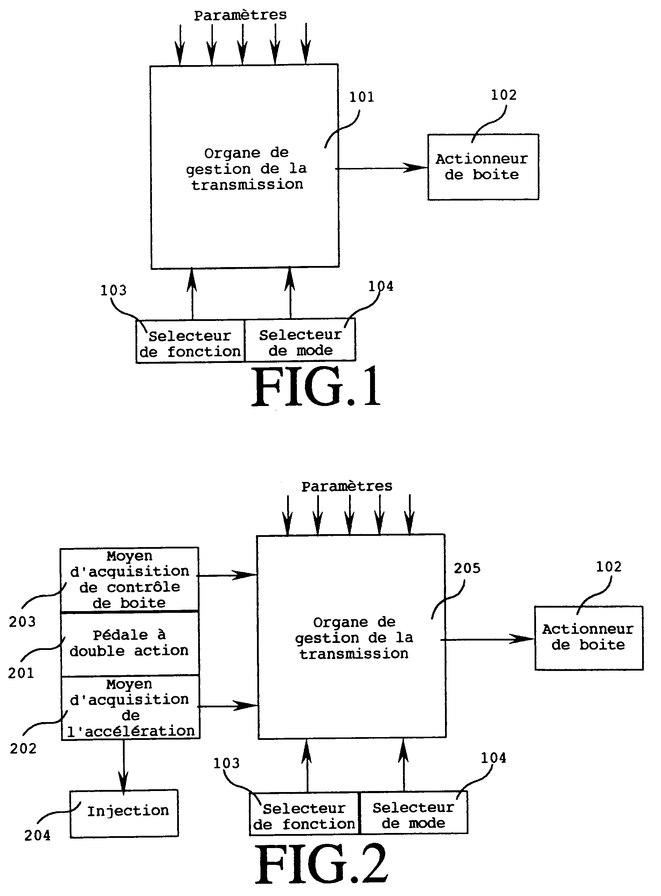

La figure 1 représente un schéma fonctionnel général des réalisations antérieures de dispositifs de gestion de transmission automatique, ou l'on retrouve un organe de gestion de la transmission (101), actionnant la boîte par l'actionneur (102) en fonction de paramètres mesurés, de commandes provenant d'un sélecteur de fonction (103), et le cas échéant d'une commande (104) de sélection du mode de comportement dynamique, telle que décrite par le brevet U.S. 4 669 335 déposé en 1984.

Dans de nombreux pays, les boîtes de vitesses du type automatique n'ont pas supplanté les boîtes de vitesses manuelles, du fait notamment d'un des inconvénients majeurs de leur gestion : elles ne peuvent pas anticiper la manoeuvre du véhicule en fonction des intentions du conducteur, et donc elles ne choisissent pas le rapport de transmission optimum en fonction de la manoeuvre qui est sur le point d'être exécutée par le véhicule. Par exemple, une boîte de vitesse automatique attend l'ordre de réaccélération pour rétrograder lors d'un dépassement. Ceci est également vrai pour les transmission dites "à variation continue".

Pour pallier, au moins partiellement, à cet inconvénient, on a réalisé des systèmes de gestion de boîtes comportant:
- plusieurs modes de comportement dynamique qui peuvent être sélectionnés manuellement: ceci n'est pas approprié à une action rapide et nécessite un geste ample peu dans l'esprit de l'automatisme; ou
- une interprétation de diverses commandes existantes, comme l' accélérateur (ces systèmes sont appelés auto-adaptatifs): cette interprétation n'étant pas découplée de leur fonction principale, le dispositif de gestion de la boite ne peut interpréter que les évolutions d'environnement liées à l'un de ces paramères existants; ou
- un dispositif manuel de sélection des rapports: on perd l'automatisme.

Pour toutes les réalisations connues, soit la boîte ne s'adapte pas en temps réel aux événements sur le point de se produire, soit l'on fait appel à une action manuelle qui fait perdre l'attrait principal de la boîte automatique, soit enfin le système de gestion interprète une commande existante, comme l'accélérateur ce qui impose un couplage avec cette commande et ses effets ou une perturbation de la commande si un filtrage est utilisé.

D'autre part, on connait notamment par le brevet N° DE-A-2 043 191 de 1972 une pédale pour engin de chantier permettant d'accélérer et de sélectionner séquentiellement les rapports d'une boîte de vitesse semi-automatique.

Un objet de la présente invention est de permettre au conducteur de faire évoluer le mode de fonctionnement dynamique de la boîte de vitesse de manière à adapter à tout moment le processus de choix du rapport de transmission à la manoeuvre que le véhicule est sur le point d'effectuer.

Un autre objet de la présente invention est d'obtenir l'évolution du comportement dynamique sans perdre l'automatisme, c'est-à-dire sans forçage manuel des rapports, tout en permettant au comportement dynamique d'être adapté en temps réel aux événements sur le point de se produire.

Un autre objet de l'invention est de ne nécessiter aucun apprentissage particulier.

Un autre objet de la présente invention est de parvenir à ce résultat en ne distrayant aucun membre du conducteur de l'organe de commande principal auquel il est affecté, et sans perturber l'action sur ladite commande, ni faire appel au regard ou à la concentration du conducteur.

Un autre objet de la présente invention est de substituer à une action manuelle de variation du mode de comportement dynamique, une action du pied situé sur l'accélérateur, cette action pouvant être à variation continue ou discrète, sans perturber l'action d'accélération.

La figure 2 représente un schéma fonctionnel du dispositif selon l'invention; on y remarque la présence d'un système de pédale d'accélérateur (201) à double action destinée à agir d'une part sur l'injection (204) du moteur, et d'autre part sur la logique de choix du rapport de transmission, par le biais des moyens d'acquisition respectivement de l'accélération (202) et de contrôle de boîte (203). Les liaisons représentées sur la figure 2 ne sont pas exhaustives.

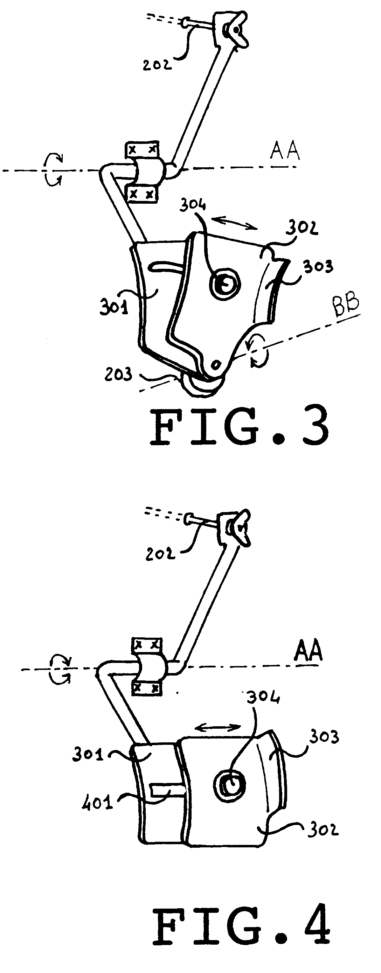

Les figures 3 et 4 représentent un mode de réalisation de la pédale d'accélérateur à double action utilisée par le dispositif selon l'invention.

Pour atteindre les objets cités plus haut, l'invention prévoit un dispositif destiné à gérer la boîte de vitesse automatique des véhicules automobiles, comportant des moyens d'acquisition d'une action du conducteur, caractérisé en ce que au moins l'un desdits moyens (203) est situé dans l'environnement immédiat de la pédale d'accélérateur (201), ou sur ladite pédale, ledit moyen d'acquisition (203) pouvant être sollicité par une action du pied du conducteur affecté à l'accélérateur, cette action étant susceptible d'être effectuée par le conducteur sans perturber l'action d'accélération, et en ce que l'information ainsi recueillie est utilisée pour définir le mode de comportement dynamique de la boîte de vitesses.

Ainsi, le dispositif permet au conducteur d'influer à volonté sur le comportement dynamique de la boîte, et donc d'adapter à tout moment le processus de choix du rapport de transmission à la manoeuvre que le véhicule est sur le point d'effectuer.

Par comportement dynamique de la boîte de vitesses, on entend la loi définissant les seuils de passage des rapports de transmission en fonction de paramètres physiques tels que la vitesse de rotation du moteur et le couple fourni par le moteur plus éventuellement d'autres paramètres comme la vitesse du véhicule, diverses températures et pressions, la commande de l'injection de carburant, ou d'autres paramètres mesurés dans le véhicule; tous ces paramètres sont utilisés de façon connue. Le procédé selon l'invention est caractérisé par l'utilisation d'un paramètre commandé par le pied du conducteur situé sur l'accélérateur mais découplé de l'accélération, ce paramètre participant à l'évolution des seuils de commutation des vitesses en fonction des paramètres physiques utilisés pour la gestion de la boîte.

Ceci est valable pour une transmission à variation continue, dont le nombre de vitesses est infini, mais dont la loi de variation et le comportement dynamique peuvent être définis de la même manière que pour une boîte classique à nombre de rapports de transmission limité.

On peut, par exemple, utiliser une pédale d'accélérateur comprenant au moins une pièce en contact avec le pied du conducteur, montée mobile à deux degrés de liberté de mouvement par rapport à la structure du véhicule, les mouvements selon les deux degrés de libertés étant contrôlés par le pied du conducteur; des moyens d'acquisition sont agencés de manière à détecter les mouvements de la pédale selon chacun desdits degrés de liberté.

Préférentiellement, le premier degré de liberté de ladite pièce en contact avec le pied du conducteur est similaire à celui des pédales d'accélérateur connues.

Une façon d'obtenir un bon découplage entre l'accélération et le contrôle de boîte est d'agencer la pédale d'accélérateur et les moyens d'acquisition de telle manière qu'une variation du choix des rapports de transmission de la boîte de vitesses est notamment fonction d'au moins une force exercée par le pied du conducteur dans un plan sensiblement orthogonal au plan dans lequel s'effectue le mouvement du pied pour l'action de l'accélérateur classique, lequel plan est sensiblement vertical et longitudinal par rapport à l'automobile.

On entend également par "mouvement du pied" une action sur un dispositif d'acquisition sensible à une force.

Ainsi, le dispositif selon l'invention ne requiert aucun apprentissage particulier, puisque l'action d'accélération connue n'est pas perturbée par l'action ou la non-action sur le mode de comportement dynamique.

Préférentiellement, le dispositif selon l'invention comporte un calculateur électronique (205) programmé de telle manière que l'action de contrôle de boîte émanant du pied du conducteur agit sur le comportement dynamique de la transmission en faisant évoluer les seuils de commutation des vitesses affectés à au moins un paramètre physique, cette évolution pouvant être continue ou discontinue, c'est à dire que l'action du pied permet de choisir entre un nombre limité ou illimité de comportements dynamiques ou "programmes".

Le système (102) d'actionnement de la boîte de vitesse par ledit dispositif de gestion est indifférent, et peut être d'un type quelconque connu, il en est de même pour le sélecteur (103) et pour les moyens d'acquisition des paramètres physiques, y compris l'accélération.

Un mode de réalisation du système (205) de gestion de la boîte de vitesse est l'utilisation d'un calculateur de gestion de transmission de type connu.

On décrira maintenant deux modes de fonctionnement :
Dans un mode de réalisation dit "à variation continue", le système de pédale d'accélérateur (201) à deux degrés de liberté possède des moyens de rappel du pied du conducteur en position de repos dans chacun desdits degrés de liberté et le système de gestion est programmé de telle manière que plus le pied du conducteur en contact avec ladite pédale s'éloigne de sa position de rappel selon ledit deuxième degré de liberté, plus le dispositif aura tendance à passer des rapports de transmission plus démultipliés à paramètres physiques constants.

Dans ce mode de réalisation, plus le pied est incliné latéralement, c'est-à-dire plus il s'écarte de la position de référence, plus le gain est élevé; ainsi, plus le pied est incliné latéralement, plus la boîte "poussera" les rapports en accélération ou plus elle rétrogradera en décélération.

Dans un autre mode de réalisation , le système de pédale d'accélérateur (201) à deux degrés de liberté possède un moyen de détection d'une impulsion latérale du pied du conducteur et le système de gestion est programmé de telle manière que le changement de mode de comportement dynamique de la boite de vitesses est obtenu par une impulsion latérale du pied, une autre impulsion permettant le retour au mode antérieur.

Dans ce mode de réalisation, l'action impulsionnelle du pied a pour effet une bascule vers le mode "sport"; une nouvelle impulsion re-bascule vers le mode "économie". Le calculateur peut également interpréter la durée de l'impulsion, par exemple une impulsion longue provoquera le maintien du mode "sport" uniquement pendant la durée de cette impulsion. Ce mode de réalisation peut notamment couvrir la fonction de "kickdown" connue, avec l'avantage du découplage de l'accélération et donc d'un changement de rapport de transmission à couple modéré et effectué avant l'accélération.

Lorsque le pied est dans la position de repos, ou avant toute impulsion, le mode de fonctionnement dynamique est le mode par défaut, proche de celui d'une boîte automatique classique en mode "économie".

Ainsi, le conducteur peut adapter à tout moment le comportement dynamique de la boîte de vitesse à ses intentions: s'il va effectuer un dépassement, il basculera le pied vers la droite, ce qui aura pour effet de faire rétrograder la boîte, ou l'inciter à rétrograder plus tôt qu'auparavant à la moindre accélération; de même, à l'abord d'un virage, le basculement du pied incitera la boîte à ne pas passer le rapport supérieur, voire même à rétrograder, malgré la décélération; en situation de descente, ou le frein moteur est nécessaire, il suffira au conducteur d'agir sur le basculement du pied au lieu de forcer les rapports; en conduite économique, le conducteur laissera son pied dans la position de repos qui correspond à sa position de rappel (ou rappellera le mode "économie" par une nouvelle impulsion dans le mode de réalisation impulsionnel).

Pour les réalisations qui n'ont pas une commande latérale impulsionnelle, il peut être avantageux que la pédale d'accélérateur comporte des moyens de blocage (304) destinés à maintenir un mode de comportement dynamique constant dans le cas ou le pied quitte brutalement l'accélérateur.

Ainsi, lors d'une décélération brutale accompagnée d'un freinage, par exemple à l'entrée d'un virage, la boîte conserve le dernier mode commandé, jusqu'à une nouvelle action sur la pédale d'accélérateur

On décrira maintenant un mode de réalisation de la partie du dispositif selon l'invention constituant le système de pédale d'accélérateur et les moyens d'acquisition qui lui sont associés.

Les figures 3 et 4 représentent un mode de réalisation dans lequel le dispositif comporte une pédale d'accélérateur (301) sur laquelle est articulée rotativement ou à coulisse au moins une pièce (302) actionnable par le conducteur, et les moyens d'acquisition (202) et (203) sont agencés de manière à détecter les mouvements du pied selon chacun des deux degrés de liberté de l'ensemble pédale - pièce-articulée. Une butée (303) est avantageusement ménagée sur la pièce (302) de manière à caler le pied du conducteur.

La figure 3 représente une variante dans laquelle le deuxième degré de liberté est une rotation selon un axe (BB), l'axe (AA) étant l'axe de rotation classique de la pédale d'accélérateur.

La figure 4 représente le cas ou le deuxième degré de liberté est une translation sur une glissière (401).

Le système est applicable pour une pédale d'accélérateur dont le premier degré de liberté est une rotation selon un axe située en bas de la pédale et non au-dessus.

Les moyens d'acquisition du contrôle de boîte utilisent par exemple un potentiomètre pour une variation continue, ou un simple interrupteur pour une sélection impulsionnelle ou discrète. De même, les moyens de rappel utilisent par exemple des ressorts.

Un dispositif de verrouillage de la pédale d'accélérateur selon le degré de liberté affecté au contrôle de boîte, peut être réalisé par un poussoir (304) monté sur un ressort et coopérant avec une crémaillère ou un dispositif à cliquets, ledit poussoir verrouillant la pédale dans la position qu'elle occupe lors de la cessation de l'effort du pied du conducteur sur ledit poussoir. Ainsi, le dispositif garde en mémoire le mode de comportement dynamique lors d'un freinage brutal.

Le dispositif selon l'invention est particulièrement destiné aux véhicules de tourisme, notamment dans sa version à impulsions, et aux véhicules industriels. Il est adaptable sur tous les types de transmission automatique, y compris les transmissions à variation continue.

## Revendications

1. Dispositif destiné à gérer la boîte de vitesses automatique de véhicules automobiles, comportant des moyens d'acquisition d'une action du conducteur, au moins l'un desdits moyens (203) délivrant une information utilisée pour définir le mode de comportement dynamique de la boîte de vitesses, caractériseé en ce que le dit moyen (203) est situé dans l'environnement immédiat de la pédale d'accélérateur (201), ou sur ladite pédale, ledit moyen (203) pouvant être sollicité par une action du pied du conducteur affecté à l'accélérateur, cette action étant susceptible d'être effectuée par le conducteur sans perturber l'action d'accélération.

2. Dispositif selon la revendication 1, caractérisé en ce qu'il comporte un calculateur électronique (205) programmé de telle manière que l'action de contrôle de boîte émanant du pied du conducteur agit sur le comportement dynamique de la transmission en faisant évoluer les seuils de commutation des vitesses affectés à au moins un paramètre physique.

3. Dispositif selon l'une quelconque des revendications précédentes, comportant une pédale d'accélérateur (301) et des moyens associés d'acquisition (202) et (203) des actions du pied du conducteur, caractérisé en ce que sur ladite pédale est articulée rotativement ou à coulisse au moins une pièce actionnable par le conducteur, et en ce que lesdits moyens d'acquisition sont agencés de manière à détecter les mouvements du pied selon chacun des deux degrés de liberté de l'ensemble pédale - pièce articulée, cet agencement permettant au conducteur d'agir d'une part sur l'accélération du moteur et d'autre part sur la logique de choix du rapport de transmission.

4. Dispositif selon l'une quelconque des revendications précédentes, caractérisé en ce qu'une variation du choix des rapports de transmission de la boîte de vitesses par ledit système de gestion est notamment fonction d'au moins une force exercée par le pied du conducteur dans un plan sensiblement orthogonal au plan dans lequel s'effectue le mouvement du pied pour l'action de l'accélérateur classique, lequel plan est sensiblement vertical et longitudinal par rapport à l'automobile, cette orthogonalité permettant une bonne dissociation des commandes.

5. Dispositif selon l'une quelconque des revendications précédentes caractérisé en ce que la pédale d'accélérateur comporte des moyens de blocage (304) destinés à maintenir un mode de comportement dynamique constant dans le cas ou le pied quitte brutalement l'accélérateur.

6. Dispositif selon l'une quelconque des revendications précédentes, comportant un système de pédale d'accélérateur (201) à deux degrés de liberté, ledit système utilisant des moyens de rappel du pied du conducteur en position de repos dans chacun desdits degrés de liberté, caractérisé en ce que le système de gestion est programmé de telle manière que plus le pied du conducteur en contact avec ladite pédale s'éloigne de sa position de rappel selon ledit deuxième degré de liberté, plus le dispositif aura tendance à passer des rapports de transmission plus démultipliés à paramètres physiques constants.

7. Dispositif selon l'une quelconque des revendications 1 à 4, comportant un système de pédale d'accélérateur (201) à deux degrés de liberté ainsi qu'un moyen de détection d'une impulsion latérale du pied du conducteur, caractérisé en ce que le système de gestion est programmé de telle manière que le changement de mode de comportement dynamique de la boite de vitesses est obtenu par une impulsion latérale du pied, une autre impulsion permettant le retour au mode antérieur.

## Claims

1. A device for controlling the automatic transmission of automobile vehicles, including acquisition means of a driver's action, at least one of said means (203) providing information that is used to define the dynamic behavior mode of the gearbox, characterized in that said means (203) is disposed in the immediate vicinity of the accelerator pedal (201), or on said pedal, said means (203) being actuable by the driver's foot affected to the accelerator pedal, this action being possible without impairing the acceleration action.

2. The device of claim 1, characterized in that it comprises an electronic calculator (205), programmed so that the action for controlling the gearbox from the driver's foot acts on the dynamic behavior of the transmission by varying the switching thresholds assigned to at least one physical parameter.

3. The device of claim 1 or 2, comprising an accelerator pedal (301) and associated means (202, 203) for acquiring actions of the driver's foot, characterized in that at least one part actuable by the driver is rotatively or slidably articulated on said pedal, and in that said acquisition means are arranged to detect the motions of the driver's foot according to each of the two degrees of liberty of the assembly including the pedal and the articulated part, said arrangement permitting the driver to act both on the motor's acceleration and on the logic for selecting the transmission ratio.

4. The device of any of the former claims, characterized in that a variation of the selection of the transmission ratio of the gearbox by said controlling device is in particular function of at least a force applied by the driver's foot in a plane substantially orthogonal to the plane in which the foot moves for acting a conventional accelerator, said plane being substantially vertical and longitudinal with respect to the automobile vehicle, said orthogonality providing a good separation of the controls.

5. The device of any of the former claims, characterized in that the accelerator pedal comprises blocking means (304) for maintaining a constant dynamic behavior mode in case the foot is abruptly taken off from the accelerator.

6. The device of any of the former claims, comprising an accelerator pedal system (201) having two degrees of freedom, said system using return means for returning the conductor foot in a quiescent position in each of said degrees of freedom, characterized in that the control system is programmed so that when the driver's foot in contact with said pedal moves off from said return position along said second degree of freedom, the device will have a tendency to adopt lower and lower gear ratios, the other physical parameters being constant.

7. The device of any of claims 1 to 4, comprising an accelerator pedal system (201) with two degrees of freedom and means for detecting a lateral pulse of the driver's foot, characterized in that the control system is programmed so that the change of the dynamic behavior mode of the gearbox is obtained by a lateral pulse of the foot, another pulse permitting to come back to the previous mode.

## Patentansprüche

1. Vorrichtung zur Steuerung des automatischen Getriebes von Automobilfahrzeugen mit Erfassungsmitteln für eine Betätigung des Fahrers, wobei mindestens eines dieser Erfassungsmittel (203) zur Definition des dynamischen Betriebsverhaltens des Getriebes verwendete Information liefert,
dadurch gekennzeichnet,
daß die Mittel (203) in unmittelbarer Nähe des Gaspedals (201) oder auf dem Pedal angeordnet sind, und daß die Mittel (203) durch den das Gaspedal betätigenden Fuß des Fahrers betätigbar sind, wobei diese Betätigung durch den Fahrer ohne Störung der Gas- oder Beschleunigungsbetätigung möglich ist.

2. Vorrichtung nach Anspruch 1, dadurch gekennzeichnet, daß ein elektronischer Rechner (205) vorgesehen ist, der derart programmiert ist, daß die Betätigung zur Steuerung des Getriebes vom Fuß des Fahrers auf das dynamische Verhalten des Getriebes einwirkt, und zwar durch Veränderung der Schaltschwellen die mindestens einem physikalischen Parameter zugeordnet sind.

3. Vorrichtung nach Anspruch 1 oder 2, wobei ein Beschleunigungs- oder Gaspedal (301) und zugeordnete Erfassungsmittel (202) und (203) vorgesehen sind zur Erfassung von Betätigungen des Fußes des Fahrers,
dadurch gekennzeichnet,
daß mindestens ein durch den Fahrer betätigbarer Teil dreh- oder gleitbar am Pedal gelagert ist, und daß die erwähnten Erfassungsmittel derart angeordnet sind, daß die Bewegungen des Fußes des Fahrers entsprechend jedem der zwei Freiheitsgrade der Anordnung einschließlich des Pedals und des gelenkig angeordneten Teils detektiert werden, wobei die Anordnung dem Fahrer gestattet sowohl auf die Motorbeschleunigung als auch auf die Logik zur Auswahl des Übersetzungsverhältnisses einzuwirken.

4. Vorrichtung nach einem der vorhergehenden Ansprüche, dadurch gekennzeichnet, daß die Veränderung der Auswahl des Übersetzungsverhältnisses des Getriebes durch die erwähnte Steuervorrichtung insbesondere die Funktion von mindestens einer Kraft ist, die durch den Fuß des Fahrers ausgeübt wird, und zwar in einer Ebene, die im wesentlichen senkrecht zu der Ebene verläuft, in der sich der Fuß des Fahrers zur üblichen Betätigung eines Gaspedals bewegt, wobei die erwähnte Ebene im wesentlichen vertikal und longitudinal bezüglich des Automobilfahrzeugs verläuft, wobei diese Orthogonalität eine gute Trennung der Steuerungen gestattet.

5. Vorrichtung nach einem der vorhergehenden Ansprüche, dadurch gekennzeichnet, daß das Gaspedal Blockiermittel (304) aufweist, um ein konstantes dynamisches Betriebsverhalten in dem Falle vorzusehen, daß der Fuß abrupt vom Gaspedal weggenommen wird.

6. Vorrichtung nach einem der vorhergehenden Ansprüche, wobei ein Beschleunigungs- oder Gaspedalsystem (201) vorgesehen ist, und zwar mit zwei Freiheitsgraden, wobei das System Rückholmittel aufweist, um den Fahrerfuß in eine Ruheposition in jedem der Freiheitsgrade zurückzuholen,
dadurch gekennzeichnet,
daß das Steuersystem derart programmiert ist, daß dann wenn der in Kontakt mit dem Pedal sich befindende Fahrerfuß sich von der Rückholposition wegbewegt, und zwar entlang des zweiten Freiheitssgrades, die Vorrichtung die Tendenz hat niedrigere und niedrigere Übersetzungsverhältnisse anzunehmen, wobei die anderen physikalischen Parameter konstant bleiben.

7. Vorrichtung nach einem der Ansprüche 1 bis 4, wobei ein Beschleunigungs- oder Gaspedalsystem (201) mit zwei Freiheitsgraden und Mitteln zum Detektieren eines seitlichen Impulses des Fußes des Fahrers vorgesehen ist, dadurch gekennzeichnet, daß das Steuersystem derart programmiert ist, daß die Änderung des dynamischen Betriebsverhaltens des Getriebes durch einen seitlichen Impuls des Fußes erhalten wird, wobei ein weiterer Impuls die Rückkehr zur vorherigen Betriebsart gestattet.
